(19) Europäisches Patentamt
European Patent Office
Office européen des brevets

(11) **EP 1 226 544 B1**

(12) **EUROPEAN PATENT SPECIFICATION**

(45) Date of publication and mention
of the grant of the patent:
**07.02.2007 Bulletin 2007/06**

(51) Int Cl.:
***G06K 9/00*** (2006.01)   ***G06K 9/40*** (2006.01)

(21) Application number: **00970648.2**

(22) Date of filing: **10.10.2000**

(86) International application number:
**PCT/US2000/027740**

(87) International publication number:
**WO 2001/033494 (10.05.2001 Gazette 2001/19)**

(54) **HAND-HELD FINGERPRINT SCANNER WITH ON-BOARD IMAGE NORMALIZATION DATA STORAGE**

TRAGBAR FINGERABDRUCKABTASTER MIT EINGEBAUTEM SPEICHER FÜR BILDNORMALISIERUNGSDATEN

LECTEUR D'EMPREINTES DIGITALES MANUEL A STOCKAGE INTEGRE DE DONNEES DE NORMALISATION D'IMAGE

(84) Designated Contracting States:
**AT BE CH CY DE DK ES FI FR GB GR IE IT LI LU MC NL PT SE**

(30) Priority: **29.10.1999 US 430296**

(43) Date of publication of application:
**31.07.2002 Bulletin 2002/31**

(73) Proprietor: **Cross Match Technologies, Inc.**
**Palm Beach Gardens, FL 33410 (US)**

(72) Inventors:
• **MCCLURG, George, William**
**Jensen Beach, FL 34957 (US)**
• **BRUNELL, David**
**West Palm Beach, FL 33405 (US)**

• **SCOTT, Walter, Guy**
**North Palm Beach, FL 33408 (US)**

(74) Representative: **Cross, James Peter Archibald et al**
**R.G.C. Jenkins & Co.,**
**26 Caxton Street**
**London SW1H 0RJ (GB)**

(56) References cited:
**EP-A- 0 924 656      GB-A- 2 313 441**
**US-A- 4 032 975**

• **PATENT ABSTRACTS OF JAPAN vol. 1999, no. 11, 30 September 1999 (1999-09-30) & JP 11 167630 A (CANON INC), 22 June 1999 (1999-06-22)**

EP 1 226 544 B1

**Description**

***Background of the Invention***

1. *Field of the Invention*

The present invention relates generally to fingerprint scanning and imaging.

2. *Related Art*

Biometrics are a group of technologies that provide a high level of security. Fingerprint capture and recognition is an important biometric technology. Law enforcement, banking, voting, and other industries increasingly rely upon fingerprints as a biometric to recognize or verify identity. See, Biometrics Explained, v. 2.0, G. Roethenbaugh, International Computer Society Assn. Carlisle, PA 1998, pages 1-34.

Fingerprint scanners having image sensors are available which capture an image of a fingerprint. A signal representative of the captured image is then sent over a data communication interface to a host computer for further processing. For example, the host can perform one-to-one or one-to-many fingerprint matching.

JP-A-11 225 272 discloses an image reader comprising a line sensor and a memory used to store parameters required for shading compensation.

Due to manufacturing tolerances and techniques, image sensors can vary from chip-to-chip, column-to-column, row-to-row, or even from pixel-to-pixel within a given chip. For example, a particular column within an image sensor may have a greater, or lesser, sensitivity to light ("sensitivity offset") than the average sensitivity among the remaining columns. Since this sensitivity offset is particular to the image sensor itself, a column having an offset in a first image sensor may not have an offset in a second image sensor. As a result of sensitivity offsets, an image sensor excited with a uniform light source may exhibit non-uniform illumination among columns. This results in a non-uniform image. Furthermore, as a result of variances among image sensors, two image sensors excited by the same uniform light source may produce non-uniform images which differ from one another. This image distortion particular to the image sensor itself is referred to as fixed pattern noise ("FPN").

While low levels of FPN are sometimes acceptable in an image sensor within a fingerprint image scanner, this noise may be of a magnitude sufficient to degrade image quality to an unacceptable level. Furthermore, acceptable FPN levels may become unacceptable if, for example, the gain of the image sensor is increased to accommodate lower light levels.

It is therefore desirable to produce a fingerprint scanner having accurate image output despite the FPN associated with the particular image sensor used in the fingerprint scanner. Furthermore, since mobile use is increasingly desired in biometric applications, such as law enforcement, police and others need a portable hand-held device to easily and accurately capture fingerprint images in the field. It is therefore desirable to produce a mobile, hand-held fingerprint scanner having accurate output despite the FPN associated with the particular image sensor used in the fingerprint scanner.

***Summary of the Invention***

According to a first aspect of the present invention, there is provided a remote fingerprint scanner according to claim 1. Local storage of image normalization data is advantageous because it allows for interchangeability among remote scanners as well as between remote scanners and host processors.

In a first embodiment, a remote fingerprint scanner, which may be a mobile, hand-held unit, includes an image sensor and image normalization data. The image normalization data is stored in a non-volatile memory. The non-volatile memory is disposed locally with the image sensor. The image normalization data is specific to the image sensor and is representative of non-uniform sensitivity among pixels, columns of pixels, or rows of pixels within the image sensor. Additionally, the remote fingerprint scanner may include a data communications interface, such as a universal serial bus (USB) or an IEEE 1394 (also called FIREWIRE) compatible interface, that couples data between the remote fingerprint scanner and a docking station. Furthermore, the remote fingerprint scanner also may include a camera board on which are disposed the image sensor as well as the non-volatile memory. In the first embodiment, the output of the remote fingerprint scanner includes both raw image data as well as the image normalization data. This allows for image normalization, and thus the elimination of fixed pattern noise, at the host processor rather than within the remote fingerprint scanner. Thus, in the first embodiment, the remote fingerprint scanner does not include a normalization processor.

In a second embodiment, a remote fingerprint scanner also includes a normalization processor. The normalization processor is preferably included in the remote fingerprint scanner's system controller. The normalization processor normalizes image output. Thus, a remote fingerprint scanner in the second embodiment outputs a normalized image.

Alternatively, even with the normalization processor, the remote fingerprint sensor of the second embodiment may be configured so that its output includes raw image data together with image normalization data, like the output of the remote fingerprint scanner of the first embodiment.

According to a second aspect of the present invention, there is provided a method of manufacturing a remote fingerprint scanner according to claim 11. An embodiment includes the steps of exciting an image sensor with a light source determining a set of normalization coefficients. These normalization coefficients are then stored in a non-volatile memory. The light source used in an embodiment may be a uniform light source. The intensity of the uniform light source may be adjusted so as to avoid saturation at either extreme of sensitivity of said image sensor.

The step of determining a set of normalization coefficients may further include determining an average image intensity of a predetermined area of pixels within the image sensor. The predetermined area of pixels may be a plurality of columns within the image sensor.

Likewise, the step of determining a set of normalization coefficients may also include determining an average column intensity for each column within said image sensor. Furthermore, comparing an average column intensity for each column to an average image intensity may also be included in the step of determining a set of normalization coefficients. Such a comparison resulting in a normalization coefficient for each column. Preferable equations used in an embodiment are also disclosed.

Further features and advantages of the present invention, as well as the structure and operation of various embodiments of the present invention, are described in detail below with reference to the accompanying drawings.

### Brief Description of the Drawings

The accompanying drawings, which are incorporated herein and form part of the specification, illustrate the present invention and, together with the description, further serve to explain the principles of the invention and to enable a person skilled in the pertinent art to make and use the invention.

FIG. 1 is a diagram of a remote fingerprint scanner together with a host processor according to the present invention.

FIGs. 2A and 2B are diagrams of a fingerprint scanner according to the first and second embodiments of the present invention, respectively.

FIGs. 3A, 3B, and 3C are illustrations of a portion of a normalization image, a portion of a raw fingerprint image, and a portion of a normalized fingerprint image, respectively.

FIGs. 4A and 4B are drawings of an example implementation of a mobile, hand-held fingerprint scanner used in a law enforcement application according to the present invention.

FIGs. 5A and 5B are flowcharts illustrating steps in a manufacturing method as well as in an image normalization process according to the present invention.

The present invention is described with reference to the accompanying drawings. In the drawings, like reference numbers indicate identical or functionally similar elements. Additionally, the left-most digit(s) of a reference number identifies the drawing in which the reference number first appears.

### Detailed Description of the Embodiments

### Terminology

As used herein, the term "remote fingerprint scanner" is used to refer to a fingerprint scanner that scans a fingerprint and then transmits image data, normalized or raw, to a host processor. The term "remote" is meant to imply that the fingerprint scanning can take place at a location physically separate from the host processor. A remote fingerprint scanner and a host processor may be considered physically separate even though they may be connected through a data interface, permanent or otherwise.

As used herein, the term "host processor" is used to refer to any type of computer, processor(s), or logic which can receive and process fingerprint images detected by a remote fingerprint scanner. Such a processor may include software for performing one-to-one or one-to-many fingerprint matching and recognition or instead, for example in the case of a host processor used in a law enforcement vehicle, may be used to further transmit detected fingerprint image data to another processor for matching and recognition.

As used herein, the term "fingerprint image" is used to refer to any type of detected fingerprint including but not limited to an image of all or part of one or more fingerprints, a rolled fingerprint, a flat stationary fingerprint, a palm print, and/or prints of multiple fingers.

As used herein, the term "local storage of image normalization data" means that the image normalization data is disposed within the same remote fingerprint scanner as is the image sensor with which the normalization data is associated.

*Fingerprint Scanner with Local Storage of Image Normalization Data*

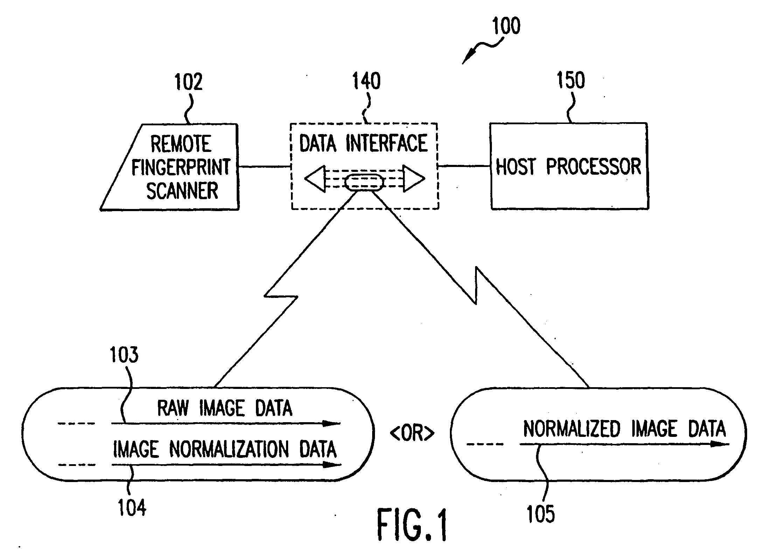

FIG. 1 is a diagram showing the arrangement of a remote fingerprint scanner together with a host processor according to an embodiment of the present invention. According to the present invention, a remote fingerprint scanner 102 is provided that includes local storage of image normalization data particular to the image sensor used in the remote fingerprint scanner. This local storage of image normalization data allows for transmission of raw fingerprint image data 103 together with image normalization data 104 to a host processor 150 through a data interface 140. Likewise, when an image normalization processor is included in the remote fingerprint scanner, transmission of a normalized fingerprint image 105 to a host processor is also possible.

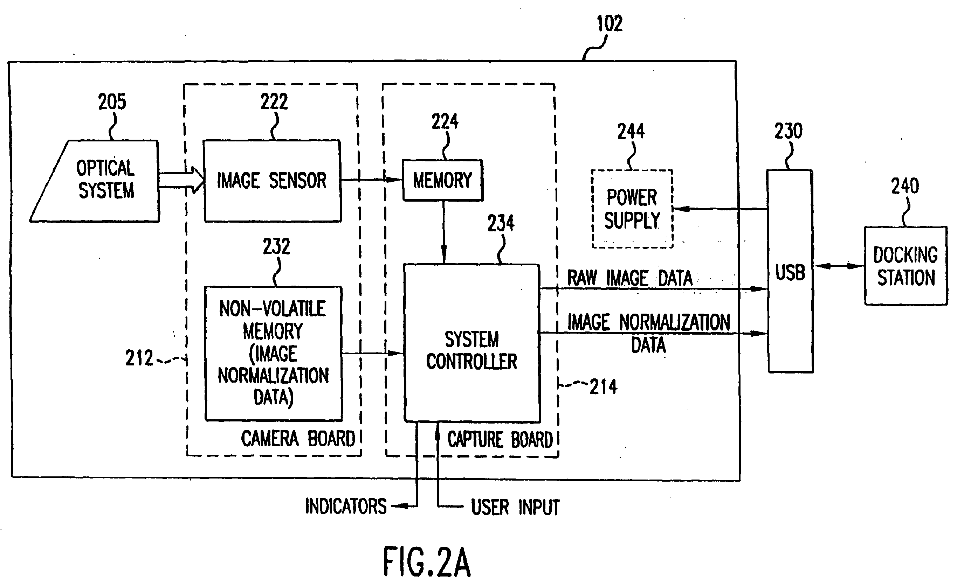

FIG. 2A shows a remote fingerprint scanner 102 together with an exemplary data interface 140 according to a first embodiment of the present invention.

Optical system 205 can include a prism and a lens system as described in U. S. Patent No. 5,900,933. Other optical systems can be used in embodiments of the present invention as would be apparent to a person skilled in the art.

Camera board 212 includes image sensor 222 and non-volatile memory 232. Any type of non-volatile memory may be used, for example an electrically-erasable read only memory (EEPROM) or an optically-erasable read only memory (Flash-EPROM), though the invention is not limited to these specific types of non-volatile memory. In one example, non-volatile memory 232 stores the executable code necessary for device operation, as well as image normalization data particular to the image sensor. Image sensor 222 includes a CMOS square pixel array. For example, a CMOS camera manufactured by Motorola Corporation can be used. The image sensor is discussed below in greater detail.

Capture board 214 includes memory 224 and system controller 234. Memory 224 is a random-access-memory for storing detected fingerprint images. Other types of memory (flash memory, floppy drives, disks, mini-floppy drives, etc.) may be used in alternative embodiments of the present invention. Furthermore, sufficient memory may be included to allow for the local storage of multiple fingerprint images. For example, captured images of fingerprints can be stored in mini-floppy drives (such as those available from Sandisk Corp. or Intel Corp.). In this way, multiple prints can be stored locally. This is especially important in border control, crime scene, and accident sight applications.

System controller 234, using the executable code stored in non-volatile memory 222, performs the necessary functions associated with device operation, such as image sensor control in response to user input.

As would be apparent to a person skilled in the art, other types of memory, circuitry and/or processing capability may be included on the capture board or within the system controller, examples of which include a frame grabber and an analog/digital converter.

Also included in the remote fingerprint scanner of the first embodiment shown in FIG. 2A is a power supply 244, a Universal Serial Bus (USB) interface, indicators, and user input controls (the latter two shown as indicators and buttons in FIG. 4A). While a USB interface is used in connection with the preferred embodiments, the invention is not limited to such an interface. For example, an IEEE 1394 High Performance Serial Bus interface, RF interface, or even a proprietary interface may be used without departing from the scope of the present invention.

Returning to image sensor 222, due to manufacturing tolerances and techniques, the pixel arrays of such image sensors may vary in sensitivity from row-to-row, column-to-column, and even from pixel-to-pixel within a given array.

This variance in sensitivity is referred to as "sensitivity offset." The image distortion which results from the sensitivity offset specific to a given image sensor is known as fixed-pattern-noise, or FPN. While FPN is frequently within tolerable ranges, there is a level of noise beyond which image quality is unacceptable.

Furthermore, otherwise acceptable FPN levels may become unacceptable if, for example, the gain of the image sensor is increased to accommodate lower light levels. In order to correct for FPN, image normalization data particular to the pixel array may be produced.

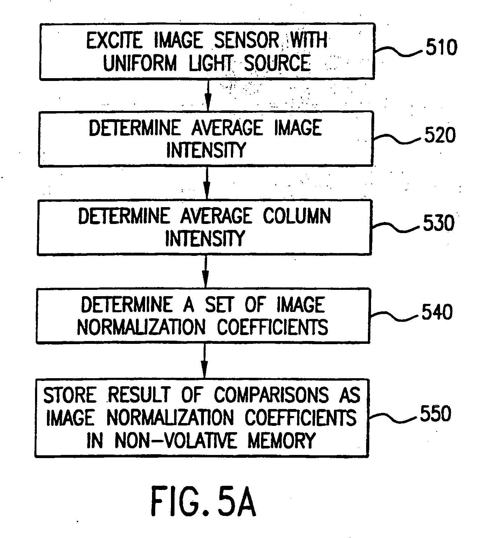

FIG. 5A is a flow-chart illustrating one example of an image normalization technique used in a method of manufacturing a remote fingerprint image scanner according to an embodiment of the present invention (steps 510-550). While a method of manufacturing a remote fingerprint scanner according to an embodiment of the present invention would necessarily include steps beyond those shown in FIG. 5A and discussed below (such as mounting the disclosed components on the respective boards, interconnecting the components, forming the housing, etc.), these steps are within the level of ordinary skill in the art and their specifics are not critical to the instant invention and so are not further discussed. Any additionally appropriate manufacturing techniques, steps, or processes may be performed without departing from the scope of the instant invention.

In the first step shown in FIG. 5A, the image sensor is excited with a light source (step 510). Preferably the light source used in step 510 is a uniform light source. The image received by the image sensor in response to this uniform light source is referred to herein as a "normalization image". When producing a normalization image, the intensity of the uniform light source may be adjusted to avoid saturation at either extreme of the sensitivity of the image sensor. For example, if the uniform light source is too bright, the normalization image may not include a range of values as a result of saturation. In this situation, the intensity of the uniform light source should be lowered so that the normalization image includes both positive and negative sensitivity offsets. An example of such a normalization image is shown in

4

FIG. 3A.

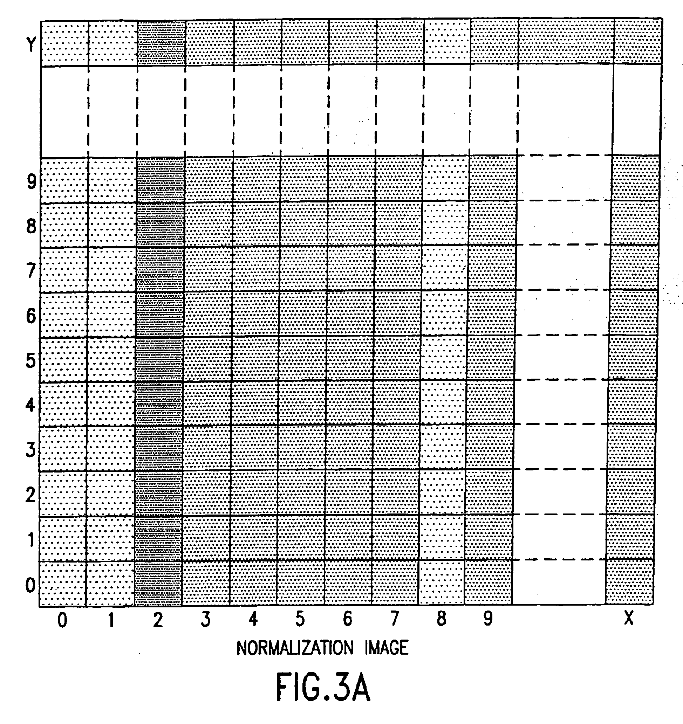

In FIG. 3A, the output of the image sensor is shown as a pixel array having columns 0-X and rows 0-Y. For the sake of clarity, only a small number of pixels included in the image sensor are depicted in the figures. The actual number pixels in the image sensor is not critical since the image size can be scaled up or down by the host processor, as desired. In the present example, the array may be a 640x480 array which can be scaled to 512 x 512, a size which conforms with software provided by the FBI. Furthermore, standard image size is 1" x 1", 500 dpi, 256 levels of gray-scale (ANSI-NIST).

As can be seen from the normalization image of FIG. 3A, while most pixels responded evenly to the uniform light source, some columns of pixels demonstrated a sensitivity offset, resulting in a non-uniform image. While such an offset is also possible among rows or individual pixels, the most frequently encountered offset is among columns.

After a normalization image is produced, an average image sensitivity associated with the image sensor is determined (step 520). This average intensity can be determined with the following equation:

$$\text{AVERAGE IMAGE INTENSITY} = \frac{\sum_{col=0}^{X} \sum_{row=n}^{n'} \text{IMAGE(col, row)}}{(X+1) \times (n'-n+1)};$$

where X+1 is the total number of columns in said image sensor, and where n and n' are integers such that $0 \leq n < Y$ and $0 < n' \leq Y$ (where Y is the maximum row ordinate value in said image sensor), and such that n'-n+1 represents the number of rows within each column from which individual column intensity is determined. As can be seen from the above equation, the average image intensity is calculated by summing, column-by-column, the intensity within a number of rows within the column. Since the column itself will have a sensitivity offset, only a sample of rows from within each column need be summed. Five to ten rows within each column is generally sufficient, for example. Once the sum of the intensity of all included pixels is calculated, it is then divided by the total number of pixels included in the calculation. This results in an average image value.

While in this example all the columns in the array were used to arrive at an average image value, one skilled in the art given this description would recognize that such an average can also be determined through evaluation of only a subset of columns in the array. Of course, in certain applications, the number of columns used in the calculation is not large enough, sensitivity offsets among the averaged columns may skew the result of the average image intensity calculation. Thus, including all columns in the calculation is preferred.

In step 530, the average image intensity of each column is determined. The same normalization image used to calculate the average image intensity can be used. The average column intensity of a given column, x, can be determined with the following equation:

$$\text{AVERAGE COLUMN INTENSITY}(x) = \frac{\sum_{row=n}^{n'} \text{IMAGE(x, row)}}{(n'-n+1)};$$

where AVERAGE COLUMN INTENSITY(x) equals the average image intensity for a particular column x, and where n and n' are integers such that $0 \leq n < Y$ and $0 < n' \leq Y$ (where Y is the maximum row ordinate value in said image sensor), such that n'- n+1 represents the number of rows within each column from which average column intensity is determined.

Next, a set of image normalization coefficients is determined (step 540). In one example, the average column intensity for each column is compared to the average image intensity for the image sensor. This comparison reveals the appropriate normalization coefficient for a particular column, and can be expressed by the following equation:

$$\text{NORM}(x) = \text{AVERAGE IMAGE INTENSITY} - \text{AVERAGE COLUMN INTENSITY}(x);$$

where NORM(x) is the image normalization coefficient for a particular column, x. Thus, repeating this comparison for each column yields a set of normalization coefficients sufficient to correct for sensitivity offsets among the columns of the image sensor.

Finally, the set of image normalization coefficients determined in step 540 are stored in non-volatile memory 232 for use during device operation (step 550).

While the steps and formulas discussed above and shown in FIG. 5A are described in terms of correcting sensitivity offsets among columns within an image sensor, one skilled in the art would readily understand that these steps and formulas may be easily modified so as to correct for sensitivity offsets among rows, groups of pixels, or even among individual pixels. Furthermore, while the process describes the calculation of all average column intensities followed by the calculation of the normalization coefficients, the normalization coefficients could also be calculated one column at a time.

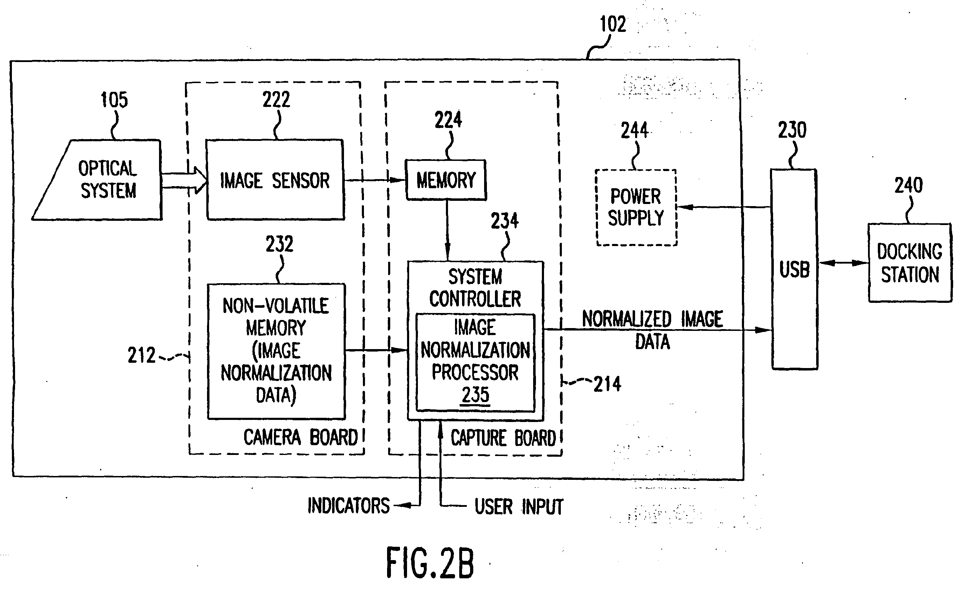

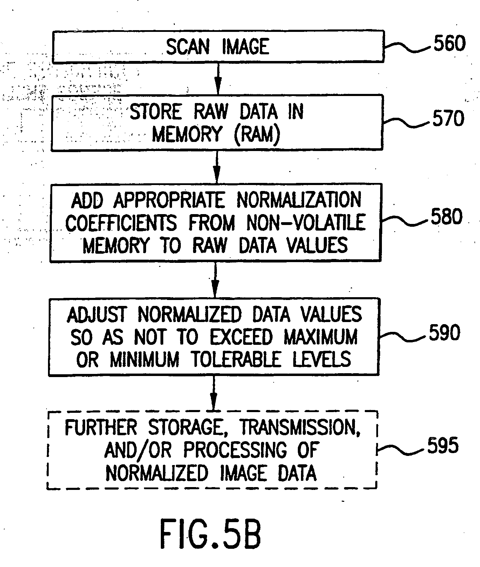

FIG. 2B illustrates a second embodiment of the disclosed invention. The second embodiment differs from the first embodiment of FIG. 2A only in that it further includes a normalization processor 235. Normalization processor 235 is preferably implemented as an additional function included in the remote fingerprint scanner's system controller 234. Normalization is the process whereby raw image data is combined with image normalization data producing normalized image data. This process can take place in normalization processor 235 as in the second embodiment, or can occur in host processor 150, using image normalization data supplied by the remote fingerprint scanner 102, as in the first embodiment. Image normalization is described further in terms of FIGs. 3A-3C, as well as FIG. 5B.

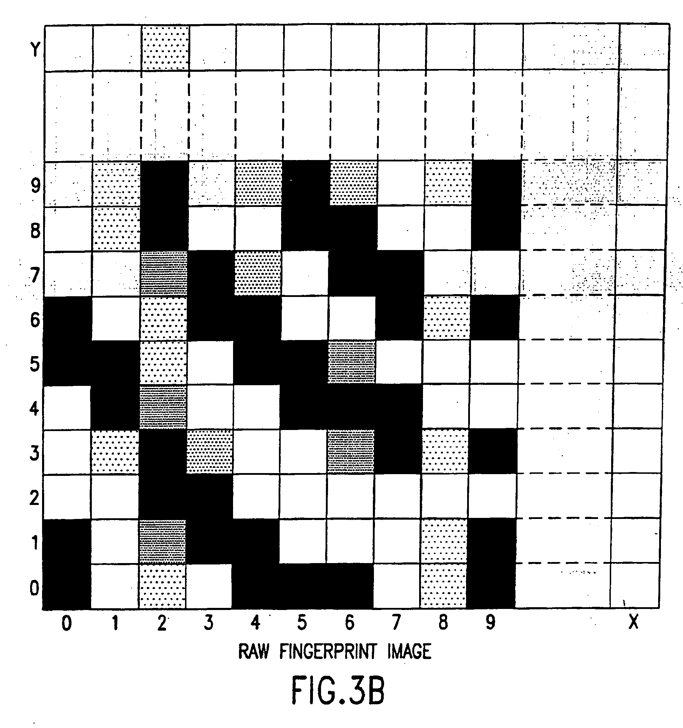

FIG. 5B is a flow chart illustrating the operational steps involved in image normalization during device operation (steps 560-595). During operation, a fingerprint is scanned (step 560) and the raw image data is stored in memory 224 (step 570). FIG. 3B shows a segment of an example of such an image. Since the image of FIG. 3B is raw, it includes the FPN illustrated in FIG. 3A. Thus, columns in FIG. 3B corresponding to those columns in FIG. 3A which demonstrate a sensitivity offset will appear lighter or darker than they should. In order to eliminate the FPN from the raw image data, the raw image data is combined with the image normalization data (step 580). This process can be described with the following equation:

$$\text{NORMALIZED IMAGE[col, row]} = \text{RAW IMAGE[col, row]} + \text{NORM[col]};$$

where NORMALIZED IMAGE[col, row] is a single normalized pixel data value, RAW IMAGE[col, row] is a single raw image pixel value, and NORM[col] is the normalization coefficient for a particular column calculated in the manner discussed above in connection with FIG. 5A. Thus, the result of the image normalization process is a set of normalized image data which can then be stored, transmitted, and/or used in further processing (step 595).

In calculating normalized image data, care should be taken that the normalized image values do not exceed allowable limits. If the result of the above equation exceeds an allowable limit, the result should be set to the maximum, or minimum, allowable value, as appropriate (step 590). This situation can occur, for example, when a raw image data value represents a pixel near saturation in a column having normalization coefficient that, when added to the raw data value (during step 580), exceeds the allowable image value. In other words, a particular column may have a positive normalization coefficient because the pixels in that column have a sensitivity offset such that they appear lighter than they should. If, during operation, the sensor records a dark value for a pixel in that column, adding the normalization coefficient associated with that column with the particular pixel value may exceed the maximum value limit. Thus, normalized image data values should be set to maximum or minimum values whenever the result of image normalization exceeds maximum or minimum allowable values (step 590).

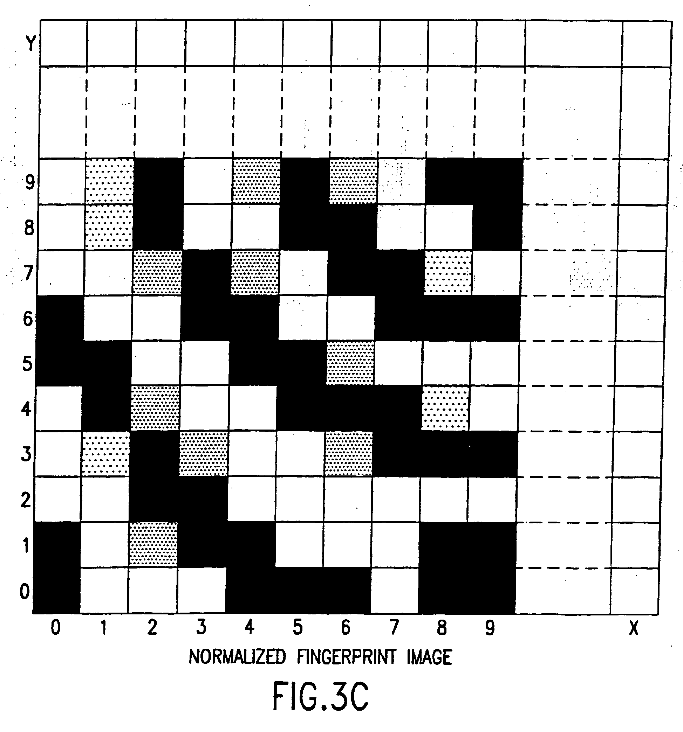

FIG. 3C illustrates a portion of a normalized image corresponding to the raw image of figure 3B. As can be seen be comparing the image of FIG. 3C with those of FIGs. 3A and 3B, FIG. 3C shows the result of correcting the image of figure 3B for the sensitivity offsets of the image sensor as demonstrated by FIG. 3A.

Because the remote fingerprint scanner of FIG. 2B includes a normalization processor in the system controller, output from the scanner can include normalized image data, while the output of the remote fingerprint scanner of FIG. 2A includes raw image data together with image normalization data. Thus, in the case of the remote fingerprint scanner of FIG. 2A, image normalization occurs in the host processor.

### Example Implementation

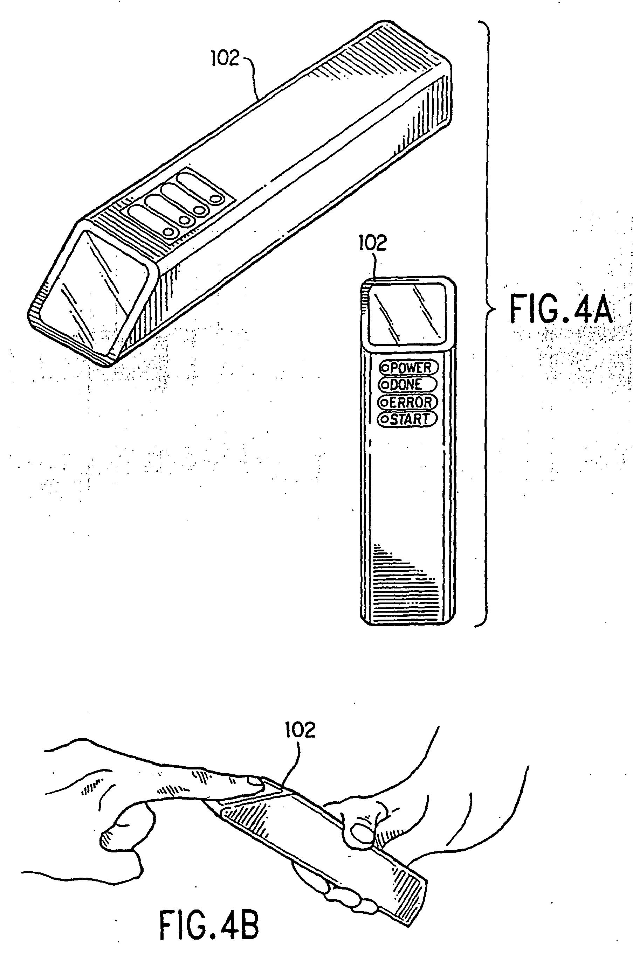

FIGs. 4A and 4B illustrate the outward appearance ofa mobile, hand-held remote fingerprint scanner according to FIGs. 2A and 2B. Fingerprint scanner 102 is ergonomically designed to fit the hand naturally. The oblong, cylindrical shape (similar to a flashlight), does not contain sharp edges. The device is small enough to be gripped by large or small hands without awkward or unnatural movement. The device is comfortable to use without muscle strain on the operator or subject. In one example, fingerprint scanner 102 is 1.5 x 8.0 x 1.5 inches (height x length x width), weighs about 340 grams (12 oz), and has an image platen size of about 1" x 1".

Fingerprint scanner 102 has controls and status indicators on the front-face of the unit for single (left or right) hand operation. The non-intimidating appearance of the fingerprint scanner 102 is designed to resemble a typical flashlight - a device that is not generally threatening to the public. Fingerprint scanner102 has no sharp edges and is constructed of a light-weight aluminum housing that is coated with a polymer to give the device a "rubberized" feel. Because fingerprint scanner 102 is small and lightweight, it may be carried on the officer's utility belt upon exiting a vehicle. The device is designed for one hand use, allowing the officer to have a free hand for protective actions. Fingerprint scanner 102 is designed for harsh environments to sustain issues such as dramatic temperature changes and non-intentional abuse.

Fingerprint scanner 102 contains a simple push button and set of 3 LED's that provide user activation and status indication. The user need only press one button to activate the unit. Once activated, the fingerprint scanner 102 awaits a finger to be introduced to the fingerprint capture platen. The digital image (or analog) is automatically captured when an adequate image area is detected. The image is then tested for quality of data prior to notifying the operator with an indication (e. g., visual indication and/or audible tone) for acceptance. The unit emits a tone to indicate a completed process. The officer may introduce the unit to a docking station (discussed below) blindly, maintaining his eyes on the subject for safety. Once seated in the docking station, the fingerprint is automatically transferred to the mobile computer without operator intervention. The detected image is scalable to conform to FBI provided software (cropped or padded to 512 pixels by 512 pixels), although the standard image size is 1"X1", 500 dpi, 256 levels of gray-scale (ANSI-NIST).

Fingerprint scanner 102 is held in either hand and used to capture a person's fingerprint. The fingerprint is captured from a cooperative individual (frontal approach) or an uncooperative individual (handcuffed subject-most commonly face down). Fingerprint scanner 102 can be operated with one-hand, allowing the officer to have a hand ready for protective actions. The officer need not have fingerprinting knowledge to capture the fingerprint.

An embodiment further includes a fingerprint scanning system. FIG. 1 shows a mobile, hand-held fingerprint scanner and docking system 100. System 100 includes a mobile, hand-held fingerprint scanner 102, data interface 140 and a host processor 150. Fingerprint scanner 102 includes local storage of image normalization data. For example, fingerprint scanner 102 may be the fingerprint scanner shown in FIGs. 2A or 2B, or a fingerprint scanning system may include both types of remote fingerprint scanners. Fingerprint scanner 102 is detachably coupled to docking station 140, as shown in FIGs. 2A and 2B. Stored images are then downloaded from fingerprint scanner 102 through docking station 140 to a host processor 150. In the case of a mobile, hand-held fingerprint scanner, for example as would be used by a law enforcement officer in the field, fingerprint scanner 102 communicates the fingerprint images together with normalization data (or normalized images if the fingerprint scanner includes a normalization processor) to a mobile host processor 150 in a vehicle.

Docking station 140 can hold fingerprint scanner 102 in a variety of configurations depending upon a particular application and environment. For example, in a law enforcement application, docking station 140 may be a holder mounted in a police car. The docking station 140 serves as a cradle that easily guides the fingerprint scanner 102 into position blindly, allowing the officer to focus on safety issues rather than the device operation. Docking station 140 is small and compact for easy placement in a tight space.

Host processor 150 can be any type of computer, processor(s), or logic which can receive and process fingerprint images detected by the fingerprint scanner 102. In one example, host processor 150 includes software for performing one-to-one or one-to-many fingerprint matching and recognition, while processing operations related to detecting, storing a detected image signal, and image normalization in the case of the remote fingerprint scanner of FIB. 2B, are carried out in capture board 214.

In another example, host processor 150 transmits detected fingerprint data to another processor for matching and recognition. For instance, if host processor 150 is in a law enforcement vehicle, host processor 150 can transmit detected fingerprint data to another processor at a police station or FBI office with access to a larger database for matching and recognition over a broader range of data.

In a law enforcement application, host processor 150 can further assemble the detected images into a format compatible with a local, county, or state AFIS or the NCIC or NCIC 2000 service. National Crime Information Center (NCIC) is an on-line information service jointly maintained by the Federal Bureau of Investigation (FBI) and criminal justice agencies throughout the United States and its territories. NCIC is being replaced by NCIC 2000, which will provide all NCIC services and new services. The new services include fingerprint matching, additional information files, and image files.

Host processor 150 may include or may be coupled through a wireless communication link to other system databases or services (such as NCIC 2000). A software interface which is TWAIN compliant is included for easy integration and Plug and Play (PnP) connectivity.

Remote fingerprint scanner 102 can be used with an FBI Mobile Imaging Unit (MIU) software application in host processor 150 to support NCIC 2000 functions in mobile law enforcement vehicles. The MIU provides a user interface, supports various peripheral devices, and transmits information in NCIC 2000-defined formats. The remote fingerprint scanner 102 can operate as a peripheral to the MIU (or to a processor that performs MID-equivalent functions).

In an example environment, fingerprint scanner 102 can meet the following criteria:

* A WINDOWS operating system environment and FBI-provided fingerprint image processing algorithms are used in NCIC 2000 fingerprint transactions;
* Fingerprint image sampling rate: 500 pixels per inch
* Size at input to FBI-provided Software: Cropped or padded to 512 pixels by 512 pixels
* Software interface from live scan device to MIU: TWAIN
* Image Quality: Electronic Fingerprint Transmission Specification, FBI Criminal Justice Information Services

### *Conclusion*

While various embodiments of the present invention have been described above, it should be understood that they have been presented by way of example only, and not limitation. It will be understood by those skilled in the art that various changes in form and details may be made therein without departing from the scope of the invention as defined in the appended claims. Thus, the breadth and scope of the present invention should not be limited by any of the above-described exemplary embodiments, but should be defined only in accordance with the following claims and their equivalents.

### Claims

1. A remote fingerprint scanner (102) comprising:

   an image sensor (222); and
   image normalization data stored in a non-volatile memory (232);

   wherein the remote fingerprint scanner (102) is capable of being detachably coupled with a docking station (240) that is coupled to a host processor (150);
   wherein said image sensor (222) is capable of detecting a fingerprint image when the remote fingerprint scanner (102) is not coupled with the docking station (240); and
   wherein data corresponding to said fingerprint image is transmitted to the host processor (150) through the docking station (240) when the remote fingerprint scanner (102) is detachably coupled with the docking station (240).

2. The remote fingerprint scanner (102) of claim 1, further comprising:

   a normalization processor (235) that, with said image normalization data, normalizes raw image data from said image sensor (222).

3. The remote fingerprint scanner (102) of claim 2, wherein said data includes normalized image data (105).

4. The remote fingerprint scanner (102) of any preceding claim, wherein said data includes raw image data (103) together with said image normalization data (104).

5. The remote fingerprint scanner (102) of claim 1, wherein said fingerprint scanner (102) is a mobile, hand-held fingerprint scanner.

6. The remote fingerprint scanner (102) of claim 1, further comprising:

   a data communications interface (230) that couples data between the remote fingerprint scanner (102) and the docking station (240).

7. The remote fingerprint scanner of claim 6, wherein said data communications interface (230) is selected from the group consisting of a universal serial bus (USB) and an IEEE 1394 compatible interface.

8. The remote fingerprint scanner (102) of claim 1, further comprising:

   a camera board (212);

wherein said image sensor (222) and said non-volatile memory (232) are disposed on said camera board (212).

9. The remote fingerprint scanner (102) of claim 1, wherein said image normalization data is specific to said image sensor (222) and is representative of non-uniform sensitivity among pixels, rows of pixels, or columns of pixels within said image sensor (222).

10. The remote fingerprint scanner (102) of claim 9, wherein said image normalization data is representative of non-uniform sensitivity among columns of pixels within said image sensor (222), said image normalization data comprising an image normalization coefficient for each column within said image sensor, wherein an image normalization coefficient for a particular column, x, within said sensor is defined according to the following equation:

$$NORM\ (x) = AVERAGE\ IMAGE\ INTENSITY - AVERAGE\ COLUMN\ INTENSITY\ (x);$$

where:

NORM(x) is the image normalization coefficient for a particular column, x;
AVERAGE IMAGE INTENSITY is defined according to the following equation:

$$AVERAGE\ IMAGE\ INTENSITY = \frac{\sum_{col=0}^{X}\sum_{row=n}^{n'} IMAGE(col, row)}{(X+1) \times (n'-n+1)}\ ;$$

where X+1 is the total number of columns in said image sensor (222), and where n and n' are integers such that $0 \leq n < Y$ and $0 < n' \leq Y$ (where Y is the maximum row ordinate value in said image sensor), such that n'-n+1 represents the number of rows within each column from which individual column intensity is determined; and
where AVERAGE COLUMN INTENSITY(x) is the average intensity for a particular column, x, within said image sensor (222) and is defined by the following equation:

$$AVERAGE\ COLUMN\ INTENSITY(x) = \frac{\sum_{row=n}^{n'} IMAGE(x, row)}{(n'-n+1)}\ ;$$

where n and n' are integers such that $0 \leq n < Y$ and $0 < n' \leq Y$ (where Y is the maximum row ordinate value in said image sensor), such that n'- n+1 represents the number of rows within each column from which average column intensity is determined.

11. A method of manufacturing a remote fingerprint scanner (102) having local storage of image normalization data comprising the steps of:

(a) exciting an image sensor (222) with a light source (510);
(b) determining a set of normalization coefficients (540);
(c) storing said normalization coefficients in a non-volatile memory (550);
(d) mounting the image sensor (222) and the non-volatile memory (232) in the remote fingerprint scanner (102);
(e) configuring the remote fingerprint scanner (102) to be capable of being detachably coupled with a docking station (240) that is coupled to a host processor (150);
(f) enabling the image sensor (222) to detect a fingerprint image when the remote fingerprint scanner (102) is not coupled with the docking station (240); and
(g) configuring the fingerprint scanner (102) to transmit data corresponding to said detected fingerprint image to the host processor (150) through the docking station (240) when the remote fingerprint scanner (102) is detectably coupled with the docking station (240).

12. The method of claim 11, further comprising providing the remote fingerprint scanner (102) with a normalization processor (235) that, with image normalization data comprising said normalization coefficients, normalizes raw image data from said image sensor (222).

13. The method of claim 12, wherein said data includes normalized image data (105).

14. The method of any one of claims 11 to 13, wherein said data includes raw image data (103) together with image normalization data comprising said normalization coefficients.

15. The method of claim 11, wherein said light source of step (a) is a uniform light source.

16. The method of claim 15, wherein step (a) includes adjusting an intensity of said uniform light source so as to avoid saturation at either extreme of sensitivity of said image sensor.

17. The method of claim 11, wherein step (b) includes determining an average image intensity for a predetermined area of pixels within said image sensor (222).

18. The method of claim 17, wherein said predetermined area of pixels is a plurality of columns within said image sensor (222).

19. The method of claim 18, wherein said average image intensity is determined as expressed in the following equation:

$$\text{AVERAGE IMAGE INTENSITY} = \frac{\sum_{col=0}^{X}\sum_{row=n}^{n'}\text{IMAGE}(col,row)}{(X+1)\times(n'-n+1)} \; ;$$

where X+1 is the total number of columns in said image sensor (222), and where n and n' are integers such that $0 \leq n < Y$ and $0 < n' \leq Y$ (where Y is the maximum row ordinate value in said image sensor), such that n'-n+1 represents the number of rows within each column from which individual column intensity is determined.

20. The method of claim 11, wherein step (b) includes determining an average column intensity for each column within said image sensor (222).

21. The method of claim 20, wherein determining an average column intensity for each column within said image sensor (222) is performed according to the following equation:

$$\text{AVERAGE COLUMN INTENSITY}(x) = \frac{\sum_{row=n}^{n'}\text{IMAGE}(x,row)}{(n'-n+1)} \; ;$$

where AVERAGE COLUMN INTENSITY(x) equals the average intensity for a particular column x, and where n and n' are integers such that $0 \leq n < Y$ and $0 < n' \leq Y$ (where Y is the maximum row ordinate value in said image sensor), such that n'-n+1 represents the number of rows within each column from which average column intensity is determined.

22. The method of claim 11, wherein step (b) includes comparing an average column intensity for each column to an average image intensity, said comparison resulting in a normalization coefficient for each column.

23. The method of claim 22, wherein said comparison is performed according to the following equation:

$$\text{NORM (x)} = \text{AVERAGE IMAGE INTENSITY} - \text{AVERAGE COLUMN INTENSITY (x)};$$

where:

NORM(x) is the image normalization coefficient for a particular column, x; AVERAGE IMAGE INTENSITY is determined as expressed in the following equation:

$$\text{AVERAGE IMAGE INTENSITY} = \frac{\sum_{col=0}^{X} \sum_{row=n}^{n'} \text{IMAGE(col,row)}}{(X+1) \times (n'-n+1)} \ ;$$

where X+1 is the total number of columns in said image sensor, and where n and n' are integers such that $0 \le n < Y$ and $0 < n' \le Y$ (where Y is the maximum row ordinate value in said image sensor), such that n'-n+1 represents the number of rows within each column from which individual column intensity is determined; and
AVERAGE COLUMN INTENSITY(x) is the average intensity for a particular column and is determined as expressed in the following equation:

$$\text{AVERAGE COLUMN INTENSITY(x)} = \frac{\sum_{row=n}^{n'} \text{IMAGE(x,row)}}{(n'-n+1)} \ ;$$

where n and n' are integers such that $0 \le n < Y$ and $0 < n' \le Y$ (where Y is the maximum row ordinate value in said image sensor (222)), such that n'-n+1 represents the number of rows within each column from which average column intensity is determined.

**Patentansprüche**

1. Fern-Fingerabdruckabtaster (102), welcher umfasst:

   einen Bildsensor (222); und
   Bildnormalisierungsdaten, welche in einem nichtflüchtigen Speicher (232) gespeichert sind;

   worin der Fern-Fingerabdruckabtaster (102) geeignet ist, mit einer Andockstation (240) lösbar gekoppelt zu sein, welche mit einem Wirtsrechner (150) gekoppelt ist; worin genannter Bildsensor (222) geeignet ist ein Fingerabdruckbild zu erkennen, wenn der Fern-Fingerabdruckabtaster (102) nicht mit der Andockstation (240) gekoppelt ist; und
   worin Daten, entsprechend genanntem Fingerabdruckbild, an den Wirtsrechner (150) durch die Andockstation (240) übertragen werden, wenn der Fern-Fingerabdruckabtaster (102) mit der Andockstation (240) lösbar gekoppelt ist.

2. Fern-Fingerabdruckabtaster (102) von Anspruch 1, welcher ferner umfasst:

   einen Normalisierungsprozessor (235), welcher bei genannten Bildnormalisierungsdaten, Ausgangsbilddaten von genanntem Bildsensor (222) normalisiert.

3. Fern-Fingerabdruckabtaster (102) von Anspruch 2, worin genannte Daten normalisierte Bilddaten (105) beinhalten.

4. Fern-Fingerabdruckabtaster (102) von einem vorhergehenden Anspruch, worin genannte Daten Ausgangsbilddaten (103) zusammen mit genannten Bildnormalisierungsdatcn (104) beinhalten.

5. Fern-Fingerabdruckabtaster (102) von Anspruch 1, worin genannter Fingerabdruckabtaster (102) ein transportabler, in der Hand gehaltener Fingerabdruckabtaster ist.

6. Fern-Fingerabdruckabtaster (102) von Anspruch 1, welcher ferner umfasst:

ein Datenkommunikationsinterface (230), welches Daten zwischen dem Fern-Fingerabdruckabtaster (102) und der Andockstation (240) koppelt.

7. Fern-Fingerabdruckabtaster von Anspruch 6, worin genanntes Datenkommunikationsinterface (230) aus der Gruppe, bestehend aus einem Universal Serial Bus (USB) und einem IEEE 1394 kompatiblem Interface, gewählt wird.

8. Fern-Fingerabdruckabtaster (102) von Anspruch 1, welcher ferner umfasst:

eine Kameraplatte (212);

worin genannter Bildsensor (222) und genannter nichtflüchtiger Speicher (232) auf genannter Kameraplatte (212) angeordnet sind.

9. Fern-Fingerabdruckabtaster (102) von Anspruch 1, worin genannte Bildnormalisierungsdaten spezifisch für genannten Bildsensor (222) und charakteristisch für ungleichmäßige Empfindlichkeit zwischen Bildpunkten, Zeilen von Bildpunkten, oder Spalten von Bildpunkten, innerhalb genanntem Bildsensor (222) sind.

10. Fern-Fingerabdruckabtaster (102) von Anspruch 9, worin genannte Bildnormalisierungsdaten charakteristisch für ungleichmäßige Empfindlichkeit zwischen Spalten von Bildpunkten innerhalb genanntem Bildsensor (222) sind, wobei genannte Bildnormalisierungsdaten einen Bildnormalisierungskoeffizienten für jede Spalte innerhalb genanntem Bildsensor umfassen, worin ein Bildnormalisierungskoeffizient für eine bestimmte Spalte, x, innerhalb genanntem Sensor gemäß der folgenden Gleichung definiert ist:

$$\text{NORM}\ (x)\ =\ \text{DURCHSCHNITTLICHE}\quad \text{BILDINTENSITÄT}\ -$$

$$\text{DURCHSCHNITTLICHE SPALTENINTENSITÄT}\ (x);$$

wo:

NORM (x) ist der Bildnormalisierungskoeffizient für eine bestimmte Spalte, x;
DURCHSCHNITTLICHE BILDINTENSITÄT ist gemäß der folgenden Gleichung definiert:

$$\text{DURCHSCHNITTLICHE BILDINTENSITÄT} = \frac{\sum_{spalte=0}^{x}\sum_{zeile=n}^{n'} BILD(spalte, zeile)}{(X+1)*(n'-n+1)}\ ;$$

wo X+1 die Gesamtzahl von Spalten bei genanntem Bildsensor (222) ist, und wo n und n' ganze Zahlen sind, so dass $0 \leq n < Y$ und $0 < n' \leq Y$ (wo Y der maximale Zeilenordinatenwert bei diesem Bildsensor ist), so dass n'-n+1 die Anzahl von Zeilen innerhalb jeder Spalte, von welcher individuelle Spaltenintensität bestimmt wird, repräsentiert; und
wo DURCHSCHNITTLICHE SPALTENINTENSITÄT (x) die durchschnittliche Intensität für eine bestimmte Spalte, x, ist, innerhalb genanntem Bildsensor (222) und durch die folgende Gleichung definiert ist:

$$\text{DURCHSCHNITTLICHE SPALTENINTENSITÄT (x)} = \frac{\sum_{spalte=0}^{n} BILD(x, zeile)}{(n'-n+1)} \; ;$$

wo n und n' ganze Zahlen sind, so dass $0 \leq n < Y$ und $0 < n' \leq Y$ (wo Y der maximale Spaltenordinatenwert bei genanntem Bildsensor ist), so dass n'-n+1 die Anzahl von Zeilen innerhalb jeder Spalte, von welcher individuelle Spaltenintensität bestimmt wird, repräsentiert.

11. Verfahren zum Herstellen eines Fern-Fingerabdruckabtasters (102), welcher lokalen Speicher von Bildnormalisierungsdaten besitzt, umfassend die Schritte:

(a) Stimulieren eines Bildsensors (222) mit einer Lichtquelle (510);
(b) Bestimmen eines Satzes von Normalisierungskoeffizienten (540);
(c) Speichern genannter Normalisierungskoeffizienten in einem nichtflüchtigem Speicher (550);
(d) Montieren des Bildsensors (222) und des nichtflüchtigen Speichers (232) in dem Fern-Fingerabdruckabtaster (102);
(e) Konfigurieren des Fern-Fingerabdruckabtasters (102) um fähig zu sein, mit einer Andockstation (240) lösbar gekoppelt zu sein, welche an einen Wirtsrechner (150) gekoppelt ist;
(f) dem Bildsensor (222) Ermöglichen ein Fingerabdruckbild zu erkennen, wenn der Fern-Fingerabdruckabtaster (102) nicht mit der Andockstation (240) gekoppelt ist; und
(g) Konfigurieren des Fern-Fingerabdruckabtasters (102), um Daten, entsprechend genanntem erkanntem Fingerabdruckbilds, zu dem Wirtsrechner (150) durch die Andockstation (240) zu übertragen, wenn der Fern-Fingerabdruckabtaster (102) mit der Andockstation (240) lösbar gekoppelt ist.

12. Verfahren von Anspruch 11, welches ferner Ausstatten des Fern-Fingerabdruckabtasters (102) mit einem Normalisierungsprozessor (235) umfasst, welcher, mit Bildnormalisierungsdaten, welche genannte Normalisierungskoeffizienten umfassen, Ausgangsbilddaten von genanntem Bildsensor (222) normalisiert.

13. Verfahren von Anspruch 12, worin genannte Daten normalisierte Bilddaten (105) beinhalten.

14. Verfahren von irgend einem von Ansprüchen 11 bis 13, worin genannte Daten Ausgangsbilddaten (103) zusammen mit Bildnormalisierungsdaten, welche genannte Normalisierungskoeffizienten umfassen, beinhalten.

15. Verfahren von Anspruch 11, worin genannte Lichtquelle von Schritt (a) eine gleichmäßige Lichtquelle ist.

16. Verfahren von Anspruch 15, worin Schritt (a) Einstellen einer Intensität von genannter gleichmäßiger Lichtquelle beinhaltet, um somit Sättigung an einer von beiden Empfindlichkeits-Extremen von genanntem Bildsensor zu verhindern.

17. Verfahren von Anspruch 11, worin Schritt (b) Bestimmen einer durchschnittlichen Bildintensität für einen vorgegebenen Bereich von Bildpunkten innerhalb genanntem Bildsensor (222) umfasst.

18. Verfahren von Anspruch 17, worin genannter vorgegebener Bereich von Bildpunkten eine Vielzahl von Spalten innerhalb genanntem Bildsensor (222) ist.

19. Verfahren von Anspruch 18, worin genannte durchschnittliche Bildintensität bestimmt wird, wie in der folgenden Gleichung ausgedrückt:

$$\text{DURCHSCHNITTLICHE BILDINTENSITÄT} = \frac{\sum_{spalte=0}^{x} \sum_{zeile=n}^{n'} BILD(spalte, zeile)}{(X+1)*(n'-n+1)} \; ;$$

wobei X+1 die gesamte Anzahl von Spalten in genanntem Bildsensor (222) ist, und wo n und n' ganze Zahlen sind, so dass $0 \leq n < Y$ und $0 < n' \leq Y$ (wo Y der maximale Zeilenordinatenwert bei genanntem Bildsensor ist), so dass n'-n+1 dic Anzahl von Zeilen innerhalb jeder Spalte, von welcher individuelle Spaltenintensität bestimmt wird, repräsentiert.

20. Verfahren von Anspruch 11, worin Schritt (b) Bestimmen einer durchschnittlichen Spaltenintensität, für jede Spalte innerhalb genanntem Bildsensor (222), beinhaltet.

21. Verfahren von Anspruch 20, worin Bestimmen einer durchschnittlichen Spaltenintensität, für jede Spalte innerhalb genanntem Bildsensor (222), gemäß der folgenden Gleichung ausgeführt ist:

$$\text{DURCHSCHNITTLICHE SPALTENINTENSITÄT } (x) = \frac{\sum_{spalte=0}^{n} BILD(x, zeile)}{(n'-n+1)} \; ;$$

wo DURCHSCHNITTLICHE SPALTENINTENSITÄT (x) der durchschnittlichen Intensität für eine bestimmte Spalte x gleicht, und wo n und n' ganze Zahlen sind, so dass $0 \leq n < Y$ und $0 < n' \leq Y$ (wo Y der maximale Zeilenordinatenwert in genanntem Bildsensor ist), so dass n'-n+1 die Anzahl von Zeilen innerhalb jeder Spalte, von welcher individuelle Spaltenintensität bestimmt wird, repräsentiert.

22. Verfahren von Anspruch 11, worin Schritt (b) Vergleichen einer durchschnittlichen Spaltenintensität für jede Spalte, zu einer durchschnittlichen Bildintensität, umfasst, wobei genannter Vergleich in einem Normalisierungskoeffizienten für jede Spalte resultiert.

23. Verfahren von Anspruch 22, worin genannter Vergleich gemäß der folgenden Gleichung ausgeführt wird:

$$\text{NORM} \quad (x) \quad = \quad \text{DURCHSCHNITTLICHE} \quad \text{BILDINTENSITÄT} \quad \div$$
$$\text{DURCHSCHNITTLICHE SPALTENINTENSITÄT } (x);$$

wo:

NORM (x) ist der Bildnormalisierungskoeffizient für eine bestimmte Spalte, x;
DURCHSCHNITTLICHE BILDINTENSITÄT wird, wie in der folgenden Gleichung ausgedrückt, bestimmt:

$$\text{DURCHSCHNITTLICHE BILDINTENSITÄT} = \frac{\sum_{spalte=0}^{x} \sum_{zeile=n}^{n'} BILD(spalte, zeile)}{(X+1)^{*}(n'-n+1)} \; ;$$

wo X+1 die gesamte Anzahl von Spalten in genanntem Bildsensor ist, und wo n und n' ganze Zahlen sind, so dass $0 \leq n < Y$ und $0 < n' \leq Y$ (wo Y der maximale Zeilenordinatenwert in genanntem Bildsensor ist), so dass n'-n+1 die Anzahl von Zeilen innerhalb jeder Spalte, von welcher individuelle Spaltenintensität bestimmt wird, repräsentiert; und DURCHSCHNITTLICHE SPALTENINTENSITÄT (x) ist die durchschnittliche Intensität für eine bestimmte Spalte und wird, wie in der folgenden Gleichung ausgedrückt, bestimmt:

$$\text{DURCHSCHNITTLICHE SPALTENINTENSITÄT } (x) = \frac{\sum_{spalte=0}^{n} BILD(x, zeile)}{(n'-n+1)} \; ;$$

wo n und n' ganze Zahlen sind, so dass $0 \leq n < Y$ und $0 < n' \leq Y$ (wo Y der maximale Zeilenordinatenwert in genanntem Bildsensor (222) ist), so dass n'-n+1 die Anzahl von Zeilen innerhalb jeder Spalte, von welcher durchschnittliche Spaltenintensität bestimmt wird, repräsentiert.

**Revendications**

1. Lecteur d'empreintes digitales à distance (102) comprenant :

   un capteur d'image (222) ; et
   des données de normalisation d'image stockées dans une mémoire non volatile (232) ;

   dans lequel le lecteur d'empreintes digitales à distance (102) est capable d'être couplé de manière détachable à une station d'accueil (240) qui est couplée à un processeur hôte (150) ;
   dans lequel ledit capteur d'image (222) est capable de détecter une image d'empreinte digitale lorsque le lecteur d'empreintes digitales à distance (102) n'est pas couplé à une station d'accueil (240) ; et
   dans lequel des données correspondant à ladite image d'empreinte digitale sont transmises au processeur hôte (150) par l'intermédiaire de la station d'accueil (240) lorsque le lecteur d'empreintes digitales à distance (102) est couplé de manière détachable à la station d'accueil (240).

2. Lecteur d'empreintes digitales à distance (102) selon la revendication 1, comprenant en outre :

   un processeur de normalisation (235) qui, avec lesdites données de normalisation d'image, normalise les données d'image brutes dudit capteur d'image (222).

3. Lecteur d'empreintes digitales à distance (102) selon la revendication 2, dans lequel lesdites données comprennent des données d'image normalisées (105).

4. Lecteur d'empreintes digitales à distance (102) selon l'une quelconque des revendications précédentes, dans lequel lesdites données comprennent des données d'image brutes (103) avec lesdites données de normalisation d'image (104).

5. Lecteur d'empreintes digitales à distance (102) selon la revendication 1, dans lequel ledit lecteur d'empreintes digitales (102) est un lecteur d'empreintes digitales à main portable.

6. Lecteur d'empreintes digitales à distance (102) selon la revendication 1, comprenant en outre :

   une interface de communication de données (230) qui fait communiquer des données entre le lecteur d'empreintes digitales à distance (102) et la station d'accueil (240).

7. Lecteur d'empreintes digitales à distance selon la revendication 6, dans lequel ladite interface de communication de données (230) est choisie dans l'ensemble comprenant un bus série universel (USB) et une interface compatible avec la norme IEEE 1394.

8. Lecteur d'empreintes digitales à distance (102) selon la revendication 1, comprenant en outre :

   une carte de caméra (212) ;

   dans lequel ledit capteur d'image (222), et ladite mémoire non volatile (232) sont disposés sur ladite carte de caméra (212).

9. Lecteur d'empreintes digitales à distance (102) selon la revendication 1, dans lequel lesdites données de normalisation d'image sont propres audit capteur d'image (222) et sont représentatives d'une sensibilité non uniforme parmi les pixels, les rangées de pixels ou les colonnes de pixels dans ledit capteur d'image (222).

10. Lecteur d'empreintes digitales à distance (102) selon la revendication 9, dans lequel lesdites données de normalisation d'image sont représentatives d'une sensibilité non uniforme parmi les colonnes de pixels dans ledit capteur d'image (222), lesdites données de normalisation d'image comprenant un coefficient de normalisation d'image pour chaque colonne dans ledit capteur d'image, dans lequel un coefficient de normalisation d'image pour une colonne particulière, x, dans ledit capteur est défini selon l'équation suivante :

$$\text{NORM}(x) = \text{INTENSITÉ IMAGE MOYENNE} - \text{INTENSITÉ COLONNE MOYENNE}(x),$$

où NORM(x) représente le coefficient de normalisation d'image pour une colonne particulière, x ;
INTENSITÉ IMAGE MOYENNE est défini selon l'équation suivante :

$$\text{INTENSITÉ IMAGE MOYENNE} = \frac{\sum_{col=0}^{X}\sum_{ran=n}^{n'}\text{IMAGE}(col,ran)}{(X+1)\times(n'-n+1)}$$

où X+1 est le nombre total de colonnes dans ledit capteur d'image (222), et où n et n' sont des entiers tels que $0 \leq n < Y$ et $0 < n' \leq Y$ (où Y est la valeur d'ordonnée de rangée maximum dans ledit capteur d'image), de sorte que n'-n+1 représente le nombre de rangées à l'intérieur de chaque colonne à partir desquelles on détermine une intensité de colonne individuelle ; et
où INTENSITÉ COLONNE MOYENNE(x) représente l'intensité moyenne pour une colonne particulière, x, dans ledit capteur d'image (222) et est définie par l'équation suivante :

$$\text{INTENSITÉ COLONNE MOYENNE}(x) = \frac{\sum_{ran=n}^{n'}\text{IMAGE}(x,ran)}{(n'-n+1)}$$

où n et n' sont des entiers tels que $0 \leq n < Y$ et $0 < n' \leq Y$ (où Y est la valeur d'ordonnée de rangée maximum dans ledit capteur d'image), de sorte que n'-n+1 représente le nombre de rangées à l'intérieur de chaque colonne à partir desquelles on détermine l'intensité de colonne moyenne.

11. Procédé de fabrication d'un lecteur d'empreintes digitales à distance (102) comportant un enregistrement local de données de normalisation d'image comprenant les étapes consistant à :

(a) exciter un capteur d'image (222) avec une source de lumière (510) ;
(b) déterminer un ensemble de coefficients de normalisation (540) ;
(c) mémoriser lesdits coefficients de normalisation dans une mémoire non volatile (550) ;
(d) monter le capteur d'image (222) et la mémoire non volatile (232) dans le lecteur d'empreintes digitales à distance (102) ;
(e) configurer le lecteur d'empreintes digitales à distance (102) pour qu'il soit capable d'être couplé de manière détachable à une station d'accueil (240) qui est couplée à un processeur hôte (150) ;
(f) permettre au capteur d'image (222) de détecter une image d'empreinte digitale lorsque le lecteur d'empreintes digitales à distance (102) n'est pas couplé à la station d'accueil (240) ; et
(g) configurer le lecteur d'empreintes digitales à distance (102) pour transmettre des données correspondant à ladite image d'empreinte digitale détectée au processeur hôte (150) par l'intermédiaire de la station d'accueil (240) lorsque le lecteur d'empreintes digitales à distance (102) est couplé de manière détectable à la station d'accueil (240).

12. Procédé selon la revendication 11, comprenant en outre le fait de munir le lecteur d'empreintes digitales à distance (102) d'un processeur de normalisation (235) qui, avec les données de normalisation d'image comprenant lesdits coefficients de normalisation, normalise les données d'image brutes dudit capteur d'image (222).

13. Procédé selon la revendication 12, dans lequel lesdites données comprennent des données d'image normalisées (105).

**14.** Procédé selon l'une quelconque des revendications 11 à 13, dans lequel lesdites données comprennent des données d'image brutes (103) avec les données de normalisation d'image comprenant lesdits coefficients de normalisation.

**15.** Procédé selon la revendication 11, dans lequel ladite source de lumière de l'étape (a) est une source de lumière uniforme.

**16.** Procédé selon la revendication 15, dans lequel l'étape (a) comprend le réglage de l'intensité de ladite source de lumière uniforme pour éviter la saturation à un extrême quelconque de la sensibilité dudit capteur d'image.

**17.** Procédé selon la revendication 11, dans lequel l'étape (b) comprend la détermination d'une intensité d'image moyenne pour une zone de pixels prédéterminée dans ledit capteur d'image (222).

**18.** Procédé selon la revendication 17, dans lequel ladite zone de pixels prédéterminée est une pluralité de colonnes dans ledit capteur d'image (222).

**19.** Procédé selon la revendication 18, dans lequel ladite intensité d'image moyenne est déterminée selon l'équation suivante :

$$\text{INTENSITÉ IMAGE MOYENNE} = \frac{\sum_{col=0}^{X}\sum_{ran=n}^{n'}\text{IMAGE}(col,ran)}{(X+1)\times(n'-n+1)}$$

où X+1 est le nombre total de colonnes dans ledit capteur d'image (222), et où n et n' sont des entiers tels que $0 \leq n < Y$ et $0 < n' \leq Y$ (où Y est la valeur d'ordonnée de rangée maximum dans ledit capteur d'image), de sorte que n'-n+1 représente le nombre de rangées à l'intérieur de chaque colonne à partir desquelles on détermine une intensité de colonne individuelle.

**20.** Procédé selon la revendication 11, dans lequel l'étape (b) comprend la détermination d'une intensité de colonne moyenne pour chaque colonne dans ledit capteur d'image (222).

**21.** Procédé selon la revendication 20, dans lequel la détermination d'une intensité de colonne moyenne pour chaque colonne dans ledit capteur d'image (222) est effectuée selon l'équation suivante:

$$\text{INTENSITÉ COLONNE MOYENNE}(x) = \frac{\sum_{ran=n}^{n'}\text{IMAGE}(x,ran)}{(n'-n+1)}$$

où INTENSITÉ COLONNE MOYENNE(x) est égale à l'intensité moyenne pour une colonne particulière x, et où n et n' sont des entiers tels que $0 \leq n < Y$ et $0 < n' \leq Y$ (où Y est la valeur d'ordonnée de rangée maximum dans ledit capteur d'image), de sorte que n'-n+1 représente le nombre de rangées à l'intérieur de chaque colonne à partir desquelles on détermine l'intensité de colonne moyenne.

**22.** Procédé selon la revendication 11, dans lequel l'étape (b) comprend la comparaison d'une intensité de colonne moyenne pour chaque colonne avec une intensité d'image moyenne, ladite comparaison résultant en un coefficient de normalisation pour chaque colonne.

**23.** Procédé selon la revendication 22, dans lequel ladite comparaison est effectuée selon l'équation suivante :

$$\text{NORM}(x) = \text{INTENSITÉ IMAGE MOYENNE-INTENSITÉ COLONNE MOYENNE}(x),$$

où NORM(x) représente le coefficient de normalisation d'image pour une colonne particulière, x ;

INTENSITÉ IMAGE MOYENNE est défini selon l'équation suivante :

$$\text{INTENSITÉ IMAGE MOYENNE} = \frac{\sum_{col=0}^{X}\sum_{ran=n}^{n'}\text{IMAGE}(col,ran)}{(X+1)\times(n'-n+1)}$$

où X+1 est le nombre total de colonnes dans ledit capteur d'image, et où n et n' sont des entiers tels que $0 \le n < Y$ et $0 < n' \le Y$ (où Y est la valeur d'ordonnée de rangée maximum dans ledit capteur d'image), de sorte que n'-n+1 représente le nombre de rangées à l'intérieur de chaque colonne à partir desquelles on détermine une intensité de colonne individuelle ; et

INTENSITÉ COLONNE MOYENNE(x) représente l'intensité moyenne pour une colonne particulière et est définie par l'équation suivante :

$$\text{INTENSITÉ COLONNE MOYENNE}(x) = \frac{\sum_{ran=n}^{n'}\text{IMAGE}(x,ran)}{(n'-n+1)}$$

où n et n' sont des entiers tels que $0 \le n < Y$ et $0 < n' \le Y$ (où Y est la valeur d'ordonnée de rangée maximum dans ledit capteur d'image (222)), de sorte que n'-n+1 représente le nombre de rangées à l'intérieur de chaque colonne à partir desquelles on détermine l'intensité de colonne moyenne.

FIG.1

EP 1 226 544 B1

FIG.2A

EP 1 226 544 B1

FIG.2B

EP 1 226 544 B1

NORMALIZATION IMAGE

FIG.3A

RAW FINGERPRINT IMAGE

FIG.3B

NORMALIZED FINGERPRINT IMAGE

FIG.3C

102

102

FIG.4A

POWER
DONE
ERROR
START

102

FIG.4B

EXCITE IMAGE SENSOR WITH UNIFORM LIGHT SOURCE — 510

DETERMINE AVERAGE IMAGE INTENSITY — 520

DETERMINE AVERAGE COLUMN INTENSITY — 530

DETERMINE A SET OF IMAGE NORMALIZATION COEFFICIENTS — 540

STORE RESULT OF COMPARISONS AS IMAGE NORMALIZATION COEFFICIENTS IN NON-VOLATIVE MEMORY — 550

FIG. 5A

```
┌─────────────────────────────────────┐
│            SCAN  IMAGE              │───560
└─────────────────────────────────────┘
                   │
                   ▼
┌─────────────────────────────────────┐
│         STORE  RAW  DATA  IN        │───570
│           MEMORY  (RAM)             │
└─────────────────────────────────────┘
                   │
                   ▼
┌─────────────────────────────────────┐
│   ADD  APPROPRIATE  NORMALIZATION   │
│  COEFFICIENTS  FROM  NON-VOLATILE   │───580
│    MEMORY  TO  RAW  DATA  VALUES    │
└─────────────────────────────────────┘
                   │
                   ▼
┌─────────────────────────────────────┐
│   ADJUST  NORMALIZED  DATA  VALUES  │
│  SO  AS  NOT  TO  EXCEED  MAXIMUM   │───590
│   OR  MINIMUM  TOLERABLE  LEVELS    │
└─────────────────────────────────────┘
                   │
                   ▼
┌ ─ ─ ─ ─ ─ ─ ─ ─ ─ ─ ─ ─ ─ ─ ─ ─ ─ ┐
│  FURTHER  STORAGE,  TRANSMISSION,   │
│       AND/OR  PROCESSING  OF        │───595
│       NORMALIZED  IMAGE  DATA       │
└ ─ ─ ─ ─ ─ ─ ─ ─ ─ ─ ─ ─ ─ ─ ─ ─ ─ ┘
```

# FIG.5B